# EUROPÄISCHE PATENTANMELDUNG

(11) **EP 3 919 768 A1**
(43) Veröffentlichungstag der Anmeldung: **08.12.2021**
(21) Anmeldenummer: 20178016.0
(22) Anmeldetag: 03.06.2020
(51) Int. Cl.: F16C 25/08, F16C 33/58, F16C 35/067, F16C 43/04

(54) **ANORDNUNG, VERFAHREN ZUR MONTAGE UND SIMULATION EINES WÄLZLAGERS**

(71) Anmelder: Flender GmbH, 46395 Bocholt (DE)
(72) Erfinder: Dietz, Katrin, 45357 Essen (DE); Hessling, Pascal, 46395 Bocholt (DE); Vossschmidt, Tim, 45899 Gelsenkirchen (DE)
(74) Vertreter: Michalski Hüttermann & Partner Patentanwälte mbB

(57) **Zusammenfassung**

Die Erfindung betrifft eine Anordnung (ARG) mit einem sich um eine Drehachse (RXS) erstreckenden Wälzlager (REB), einem Stator (STA), umfassend ein mit dem Stator fest verbindbares Vorspannmodul (CSM) anliegend an einer Lageranlagefläche (BCS) des Wälzlagers,
wobei das Vorspannmodul eine Modulkontaktfläche (CS2) umfasst, die an einer Statoranlagefläche (SCS) des Stators anliegt. Zur Verringerung des Montageaufwands ist nach der Erfindung vorgesehen, dass das Vorspannmodul mindestens umfasst:
- ein Lagerkontaktelement (BCM) umfassend die erste Kontaktfläche (CS1),
- ein Statorkontaktelement (SCM), umfassend die Modulkontaktfläche,
- mindestens ein zwischen dem Lagerkontaktelement und dem Statorkontaktelement angeordnetes Federelement (SPM), dass vermittels einer Federkraft einer axialen Annäherung des Lagerkontaktelements an das Statorkontaktelement entgegenwirkt. Daneben betrifft die Erfindung ein Verfahren zur Montage der Anordnung und zur Simulation.

## Beschreibung

Die Erfindung betrifft eine Anordnung mit einem sich um eine Drehachse erstreckenden Wälzlager, einem Stator, umfassend ein mit dem Stator fest verbindbares Vorspannmodul anliegend an einer Lageranlagefläche des Wälzlagers, wobei das Vorspannmodul eine Modulkontaktfläche umfasst, die an einer Statoranlagefläche des Stators anliegt.

Daneben betrifft die Erfindung ein Verfahren zur Montage der Anordnung und zur Simulation der Anordnung, sowie ein entsprechendes Computerprogrammprodukt des Wälzlagers.

Durch neue raumsparende Getriebe-Konzepte, insbesondere bei Planetengetrieben mit zum Beispiel mehreren Planetenstufen und/oder Stirnradstufen ergeben sich neue Herausforderungen bei der Dämpfungseinstellung bzw. Vorspannung tragender Wälzlager und bei der Verdrehsicherung und Vorspannung. Es bleibt hier nur wenig Platz, um eine sichere Montage zu gewährleisten und um zum Beispiel Blindmontagen zu verhindern. Etwaige Anpassarbeiten sind aufwändig.

Ausgehend von den Problemen und Nachteilen des Standes der Technik hat es sich die Erfindung zur Aufgabe gemacht, eine Anordnung eingangs definierter Art derart weiterzubilden, sodass die erläuterten Probleme und Nachteile vermieden werden. Daneben soll ein Verfahren zu Montage und ein Verfahren zur Simulation angegeben werden.

Zur erfindungsgemäßen Lösung der Aufgabe wird eine Anordnung eingangs definierter Art mit den zusätzlichen Merkmalen des Kennzeichens des unabhängigen Anspruchs 1 vorgeschlagen. Daneben schlägt die Erfindung ein Verfahren zur Montage und zur Simulation und ein entsprechendes Computerprogrammprodukt vor. Die jeweils abhängigen Unteransprüche beinhalten vorteilhafte Weiterbildungen der Erfindung.

Insbesondere zur Verringerung des Montageaufwands ist nach der Erfindung bevorzugt vorgesehen, dass das Vorspannmodul mindestens umfasst:
- ein Statorkontaktelement, umfassend die Modulkontaktfläche,
- mindestens ein zwischen der ersten Kontaktfläche und dem Statorkontaktelement angeordnetes Federelement, das vermittels einer Federkraft einer axialen Annäherung des Wälzlagers an das Statorkontaktelement entgegenwirkt.

Begriffe wie radial, tangential oder Umfangsrichtung beziehen sich jeweils auf die Drehachse, falls es nicht anderes angegeben ist.

Das bevorzugte Anwendungsgebiet der Erfindung sind Getriebe, insbesondere Planetengetriebe, insbesondere solche von Windkraftanlagen.

Je nach Wälzlager und Anwendungsfall ist es erforderlich, die Lagerung vorzuspannen. Eine Vorspannung verändert die Steifigkeit und ermöglicht eine bessere Positionskontrolle des Rotors. Daneben ist es auch möglich, eine Mindestlast der Lager zu gewährleisten.

Gemäß der Erfindung wird die Vorspannung durch die Federkraft eines Federelementes erzeugt, wobei die Höhe der Vorspannung von der Vorspannung der Federelemente abhängt.

Die Drehachse, um die sich das Wälzlager erstreckt, ist in der Regel auch die Drehachse eines Rotors einer Anlage, von der die erfindungsgemäße Anordnung ein Bestandteil ist. Vorteilhaft kann dies ein Getriebe, Planetengetriebe, insbesondere ein Planetengetriebe einer Windkraftanlage sein.

Die für das Wälzlager gewünschte Vorspannung erzielt die erfindungsgemäße Anordnung mittels eines mit dem Stator fest verbundenen Vorspannmoduls. Im betriebsfertigen Zustand der Anordnung liegt eine erste Kontaktfläche des Vorspannmoduls an einer Lageranlagefläche des Wälzlagers an. Eine Modulkontaktfläche des Vorspannmoduls liegt an einer Statoranlagefläche des Stators an. Das Vorspannmodul ist erfindungsgemäß mehrteilig aufgebaut. Zu den einzelnen Bauteilen können zählen: ein Lagerkontaktelement (optional, eine direkte Anlage des/der Federelement(e) an dem Wälzlager ist auch möglich), ein Statorkontaktelement und ein Federelement oder mehrere Federelemente. Die Federelemente können hierbei nach den im Stand der Technik bekannten Gesichtspunkten dimensioniert und ausgebildet sein. Beispielsweise können über den Umfang verteilte mehrere Spiralfedern vorgesehen sein, oder es kann eine Tellerfeder oder es können mehrere Tellerfedern verwendet werden. Grundsätzlich können auch Federn verwendet werden, die Elastomere aufweisen, oder Gasfedern.

Eine vorteilhafte Weiterbildung sieht vor, dass das Lagerkontaktelement zumindest zum Teil aus einem gehärteten Metall besteht.

Eine andere bevorzugte Weiterbildung der Erfindung sieht vor, dass das Statorkontaktelement Befestigungseinrichtungen zum Befestigen an dem Stator umfasst. Diese Befestigungseinrichtungen können insbesondere Schrauben und Muttern umfassen. Besonders zweckmäßig ist das Statorkontaktelement mit einer sich in Umfangsrichtung und entlang eines Radialabschnitts erstreckenden ersten Kontaktfläche ausgebildet, die mit axialen Durchgangsbohrungen zum Befestigen am Stator versehen ist.

Besonders zweckmäßig ist eine Ausbildung der Erfindung, bei der das Lagerkontaktelement eine Verdrehsicherung umfasst. Die Verdrehsicherung kann mit dem Statorkontaktelement und/oder dem Wälzlager im betriebsfertig montierten Zustand derart in Eingriff stehen, dass ein Verdrehen des Lagerkontaktelements relativ zu dem Statorkontaktelement verhindert wird und/ oder ein Verdrehen des Lageraußenrings verhindert wird. Diese Verdrehsicherung kann beispielsweise als Passfeder ausgeführt sein, wobei die Passfeder bevorzugt an dem Lagerkontaktelement mittels einer Verschraubung oder Verstiftung gesichert ist.

Eine zusätzliche vorteilhafte Weiterbildung sieht vor, dass das Lagerkontaktelement für das mindestens eine Federelement mindestens eine sich axial erstreckende Ausnehmung aufweist, die das Federelement zumindest teilweise radial, axial und/ oder in Umfangsrichtung führend umschließt.

Besonders bevorzugt sind die Federn des Federelements als Spiralfedern ausgebildet und über den Umfang verteilt angeordnet. Hierbei können sich die Spiralfedern mit einem Teil ihrer axialen Längserstreckung in zylindrischen Ausnehmungen befinden. Derjenige Teil der axialen Längserstreckung, der sich nicht in den Ausnehmungen befindet, ist hierbei vorteilhaft als der mögliche unter Vorspannung stehende axiale Verstellweg des Vorspannmoduls ausgebildet. Ist das Vorspannmodul maximal bzw. auf Anschlag axial zusammengedrückt, befinden sich bevorzugt die Federn vollständig in der sich axial erstreckenden zylindrischen Ausnehmung.

Eine vorteilhafte Weiterbildung sieht vor, dass das Statorkontaktelement mindestens eine Federanlagefläche aufweist, an der das mindestens eine Federelement im betriebsfertig montierten Zustand anliegt, wobei mindestens die Modulkontaktfläche oder die mindestens eine Federanlagefläche als eine durchgehende ebene Fläche ausgebildet ist. Hierbei ist bevorzugt besonderes Augenmerk auf die Zugänglichkeit dieser Fläche für eine maschinelle Bearbeitung gelegt, sodass in der Montagesituation eine einfache Anpassung der Vorspannung durch spanende Bearbeitung dieser Fläche möglich ist. Insbesondere hierbei ist es zweckmäßig, wenn das Statorkontaktelement zumindest teilweise aus einem Material geringerer Härte besteht als das Lagerkontaktelement.

Das erfindungsgemäße Verfahren zur Montage der erfindungsgemäßen oder entsprechend einer hier beschrieben weitergebildeten Anordnung umfasst:
- Zusammenfügen des Lagerkontaktelements mit mindestens einem Anlageteil - insbesondere einem Lageraußenring - des Wälzlagers,
- Einbauen der Bauteilkombination aus dem vorhergehenden Schritt in das Getriebe,
- Anpassen des Statorkontaktelements durch Bearbeitung entweder einer Federanlagefläche des Statorkontaktelements, an der das mindestens eine Federelement im betriebsfertig montierten Zustand anliegt, oder der zweiten Kontaktfläche, derart, dass die Federkraft im montierten Zustand in einem Sollbereich liegt, und
- Einbauen des Statorkontaktelements mit Befestigung an dem Stator.

Bevorzugt wird das Lagerkontaktelement mittels mindestens einer Verdrehsicherung gegen eine Relativdrehung gegenüber dem Statorkontaktelement und/oder dem Wälzlager beim Zusammenfügen des Lagerkontaktelements mit mindestens einem Anlageteil des Wälzlagers und/oder beim Einbauen des Statorkontaktelements gesichert. Bevorzugt wird für diese beiden hier erwähnten Sicherungen dieselbe Verdrehsicherung verwendet, beispielsweise eine Passfeder, die sich bevorzugt axial erstreckt aus einem Bereich einer Ausnehmung in einem Außenring des Wälzlagers über das Lagerkontaktelement (nur, wenn ein Lagerkontaktelement vorgesehen ist, dann bevorzugt entlang einer sich axial erstreckenden Nut, bevorzugt am Außenumfang des Lagerkontaktelements) zu einer Ausnehmung des Statorkontaktelements.

Die Erfindung bezieht sich auch auf ein computerimplementiertes Verfahren zur Simulation eine Anordnung nach mindestens einer durch die Ansprüche definierte Merkmalskombination. Dementsprechend umfasst die Erfindung einerseits das körperliche Gebilde mit den erfindungsgemäßen Merkmalen und andererseits auch einen digitalen Zwilling, wie er beispielsweise zum Zwecke der Simulation der Anordnung bzw. des Betriebes der Anordnung mittels mindestens eines Computers eingesetzt wird. Daneben bezieht sich die Erfindung auch auf ein entsprechendes Computerprogrammprodukt.

Im Folgenden ist die Erfindung anhand eines speziellen Ausführungsbeispiels zur Verdeutlichung näher beschrieben.

Es zeigen:
- Figur 1: eine schematische, vereinfachte Längsschnittdarstellung einer Anordnung nach der Erfindung,
- Figur 2: eine schematische, vereinfachte perspektivische Darstellung einer Anordnung nach der Erfindung,
- Figur 3: ein Ablaufdiagramm eines Verfahrens nach der Erfindung, und
- Figur 4: eine schematische Darstellung einer auf einem Computer ablaufenden Simulation einer Anordnung nach der Erfindung, Computerprogrammprodukt.

Funktionsgleiche Bauteile sind teilweise mit identischen Bezugszeichen versehen. Funktionsgleiche Bauelemente werden teilweise nicht in allen Figuren ausgewiesen und auch nicht zu jeder einzelnen Abbildung separat wiederholt erläutert. Es ist grundsätzlich davon auszugehen, dass diese Bauelemente in den unterschiedlichen Darstellungen jeweils eine im Wesentlichen gleiche Funktion aufweisen.

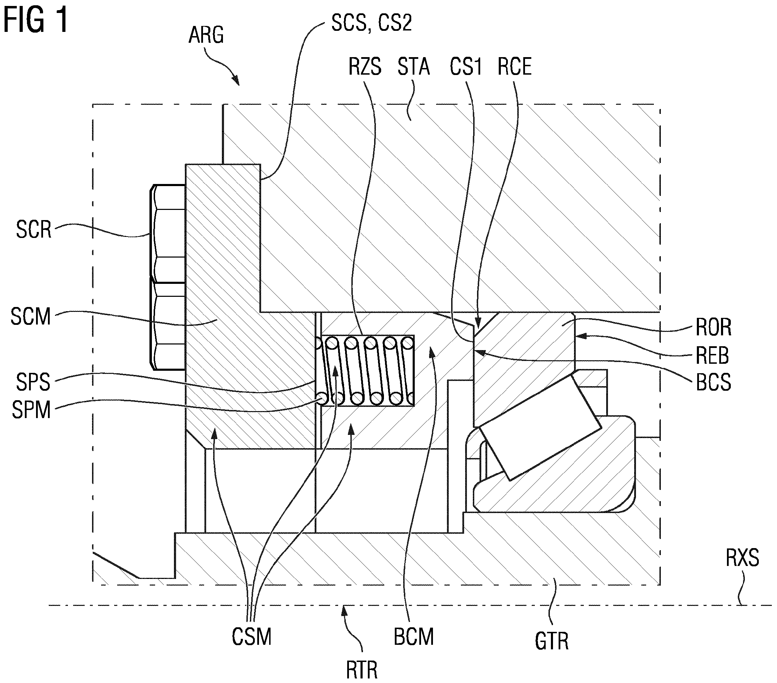

Figur 1 zeigt eine schematische, vereinfachte Längsschnittdarstellung einer Anordnung ARG mit einem sich um eine Drehachse RXS erstreckenden Wälzlager REB , einem Stator STA , umfassend ein mit dem Stator STA fest verbindbares Vorspannmodul CSM mindestens umfassend eine erste Kontaktfläche CS1 anliegend an einer Lageranlagefläche BCS des Wälzlagers REB und einer zweiten Kontaktfläche CS2 anliegend an einer Statoranlagefläche SCS des Stators STA .

In der Darstellung umfasst das Vorspannmodul CSM:
- ein Lagerkontaktelement BCM, umfassend die erste Kontaktfläche CS1,
- ein Statorkontaktelement SCM, umfassend die Modulkontaktfläche CS2, und
- mindestens ein zwischen dem Lagerkontaktelement BCM und dem Statorkontaktelement SCM angeordnetes Federelement SPM, das vermittels einer Federkraft einer axialen Annäherung des Lagerkontaktelements BCM an das Statorkontaktelement SCM entgegenwirkt.

Statt einer indirekten Anlage des/der Federelement(s/e) SPM an der Lageranlagefläche BCS des Wälzlagers REB - mittels des Lagerkontaktelements BCM - ist auch eine direkte Anlage des/der Federelement(s/e) SPM an der Lageranlagefläche BCS nach der Erfindung möglich. Das Lagerkontaktelement BCM kann - vereinfacht wiedergegeben - in den Figuren bzw. der Anordnung ARG fortgelassen werden.

Bei einer Anordnung ARG mit Lagerkontaktelement BCM weist das Lagerkontaktelement BCM für das Federelement SPM eine sich axial erstreckende Ausnehmung RZS auf, die das Federelement SPM zumindest teilweise radial, axial und in Umfangsrichtung führend umschließt. Auf diese Weise sind über den Umfang mehrere Federelemente SPM geführt.

Das Statorkontaktelement SCM weist eine Federanlagefläche SPS auf, an der die Federelemente SPM im betriebsfertig montierten Zustand anliegen. Die Federanlagefläche SPS ist als eine durchgehende ebene Fläche ausgebildet, damit eine Anpassung der Vorspannung mittels spanender Bearbeitung der Federanlagefläche SPS gut möglich ist. Alternativ kann auch die Modulkontaktfläche CS2, die sich als ebene Fläche in Umfangsrichtung erstreckt, bearbeitet werden.

Das Lagerkontaktelement BCM besteht zumindest zum Teil aus einem gehärteten Metall. Das Statorkontaktelement SCM weist Befestigungseinrichtungen SCR zum Befestigen an dem Stator STA auf.

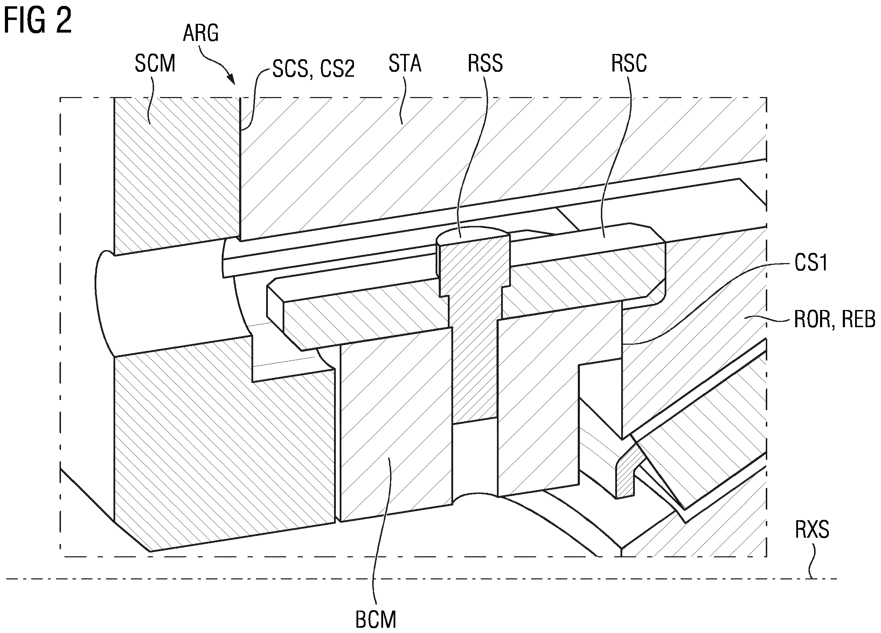

Figur 2 zeigt die Anordnung der Figur 1 perspektivisch, wobei ein Längsschnitt im Bereich einer Verdrehsicherung RSC dargestellt ist. Die Verdrehsicherung RSC steht mit dem Statorkontaktelement SCM und dem Wälzlager REB bzw. einem Lageraußenring ROR im betriebsfertig montierten Zustand derart in Eingriff, dass ein Verdrehen des Lagerkontaktelements BCM relativ zu dem Statorkontaktelement SCM ebenso verhindert ist, wie ein Verdrehen Lageraußenrings ROR zu dem Lagerkontaktelements BCM.

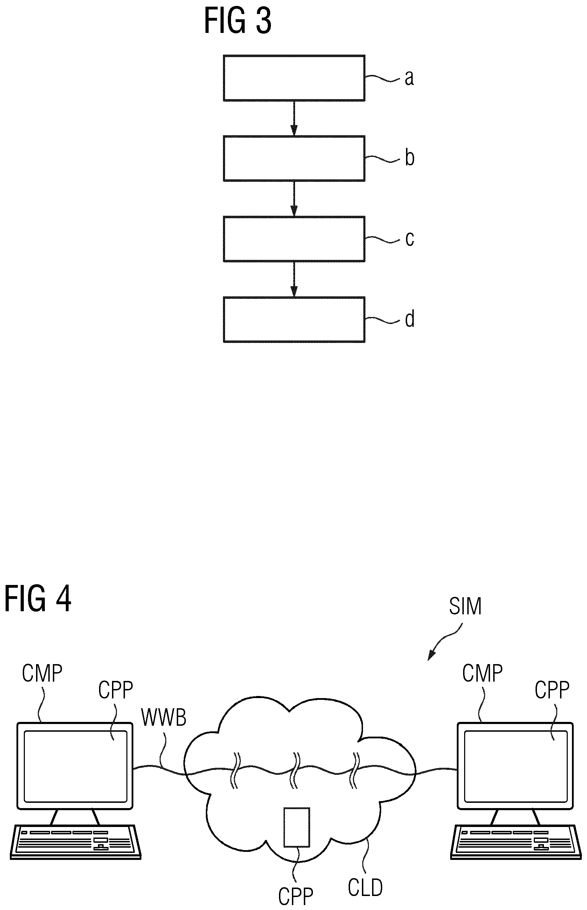

Figur 3 zeigt ein Ablaufdiagramm eines Verfahrens nach der Erfindung, mit den folgenden Schritten:
a) Zusammenfügen des Lagerkontaktelements BCM mit mindestens einem Anlageteil RCE - insbesondere einem Lageraußenring ROR - des Wälzlagers REB ,
b) Einbauen der Bauteilkombination aus dem vorhergehenden Schritt in das Getriebe GTR ,
c) Anpassen des Statorkontaktelements SCM durch Bearbeitung entweder einer Federanlagefläche SPS des Statorkontaktelements SCM , an der das mindestens eine Federelement SPM im betriebsfertig montierten Zustand anliegt, oder der zweiten Kontaktfläche CS2 , derart, dass die Federkraft im montierten Zustand in einem Sollbereich liegt, und
d) Einbauen des Statorkontaktelements SCM mit Befestigung an dem Stator STA .

Figur 4 zeigt eine schematische Darstellung einer auf einem Computer CMP - hier auf mehreren Computern CMP eines Netzwerks WWB umfassend eine Cloud CLD - ablaufenden Simulation SIM einer Anordnung ARG nach der Erfindung. Die auf den Computern CMP installierte Software ist ein Computerprogrammprodukt CPP, das bei Ausführung auf mindestens einem Computer CMP dem Benutzer mittels Schnittstellen (Bildschirm, Tastatur) eine Einflussnahme bzw. Konfiguration und einen Erkenntnisgewinn auf Basis der ausgeführten Simulation SIM ermöglicht, so dass insbesondere technische Gestaltungsentscheidungen mittels der Simulation unterstützt und verifiziert werden können.

## Patentansprüche

1. Anordnung (ARG) mit einem sich um eine Drehachse (RXS) erstreckenden Wälzlager (REB), einem Stator (STA), umfassend ein mit dem Stator (STA) fest verbindbares Vorspannmodul (CSM) anliegend an einer Lageranlagefläche (BCS) des Wälzlagers (REB),
wobei das Vorspannmodul (CSM) eine Modulkontaktfläche (CS2) umfasst, die an einer Statoranlagefläche (SCS) des Stators (STA) anliegt,
**dadurch gekennzeichnet, dass**
das Vorspannmodul (CSM) mindestens umfasst:
- ein Statorkontaktelement (SCM), umfassend die Modulkontaktfläche (CS2), und
- mindestens ein sich an dem Statorkontaktelement (SCM) abstützendes Federelement (SPM), das vermittels einer Federkraft einer axialen Annäherung der Lageranlagefläche (BCS) des Wälzlagers (REB) an das Statorkontaktelement (SCM) entgegenwirkt.

2. Anordnung (ARG) nach Anspruch 1, wobei das Vorspannmodul (CSM) mindestens umfasst:
- ein Lagerkontaktelement (BCM) mindestens umfassend eine erste Kontaktfläche (CS1),
- wobei zwischen dem Lagerkontaktelement (BCM) und dem Statorkontaktelement (SCM) das Federelement (SPM) angeordnet ist,
derart, dass das Federelement (SPM) vermittels der Federkraft einer axialen Annäherung des Lagerkontaktelements (BCM) an das Statorkontaktelement (SCM) entgegenwirkt.

3. Anordnung (ARG) nach Anspruch 1 oder 2,
wobei das Lagerkontaktelement (BCM) zumindest zum Teil aus einem gehärteten Metall besteht.

4. Anordnung (ARG) nach Anspruch 1, 2 oder 3,
wobei das Statorkontaktelement (SCM) Befestigungseinrichtungen (SCR) zum Befestigen an dem Stator (STA) umfasst.

5. Anordnung (ARG) nach Anspruch 1, 2, 3 oder 4,
wobei das Lagerkontaktelement (BCM) oder das Statorkontaktelement (SCM) eine Verdrehsicherung (RSC) umfasst.

6. Anordnung (ARG) nach dem vorhergehenden Anspruch 5,
wobei die Verdrehsicherung (RSC) mit dem Statorkontaktelement (SCM) und/oder dem Wälzlager (REB) im betriebsfertig montierten Zustand derart in Eingriff steht, dass ein Verdrehen des Lagerkontaktelements (BCM) relativ zu dem Statorkontaktelement (SCM) verhindert ist.

7. Anordnung (ARG) nach einem der vorhergehenden Ansprüche,
wobei die Anordnung (ARG) einen sich entlang der Drehachse (RXS) erstreckenden Rotor (RTR) umfasst.

8. Anordnung (ARG) nach einem der vorhergehenden Ansprüche,
wobei das Lagerkontaktelement (BCM) für das mindestens eine Federelement (SPM) mindestens eine sich axial erstreckende Ausnehmung (RZS) aufweist, die das Federelement (SPM) zumindest teilweise radial, axial und/oder in Umfangsrichtung führend umschließt.

9. Anordnung (ARG) nach einem der vorhergehenden Ansprüche,
wobei das Statorkontaktelement (SCM) mindestens eine Federanlagefläche (SPS) aufweist, an der das mindestens eine Federelement (SPM) im betriebsfertig montierten Zustand anliegt, wobei mindestens die Modulkontaktfläche (CS2) oder die mindestens eine Federanlagefläche (SPS) als eine durchgehende ebene Fläche ausgebildet ist.

10. Anordnung (ARG) nach einem der vorhergehenden Ansprüche,
wobei das Statorkontaktelement (SCM) zumindest teilweise aus einem Material geringerer oder gleicher Härte besteht als das Lagerkontaktelement (BCM).

11. Verfahren zur Montage einer Anordnung (ARG) nach mindestens einem der vorhergehenden Ansprüche in ein Getriebe (GTR), umfassend:
- Zusammenfügen zumindest eines Teils des Vorspannmoduls (CSM) mit mindestens einem Anlageteil (RCE) - insbesondere einem Lageraußenring (ROR) - des Wälzlagers (REB),
- Einbauen der Bauteilkombination aus dem vorhergehenden Schritt in das Getriebe (GTR),
- Anpassen des Statorkontaktelements (SCM) durch Bearbeitung entweder einer Federanlagefläche (SPS) des Statorkontaktelements (SCM), an der das mindestens eine Federelement (SPM) im betriebsfertig montierten Zustand anliegt, oder der Modulkontaktfläche (CS2), derart, dass die Federkraft im montierten Zustand in einem Sollbereich liegt, und
- Einbauen des Statorkontaktelements (SCM) mit Befestigung an dem Stator (STA).

12. Verfahren nach Anspruch 11,
wobei das zumindest eine Teil des Vorspannmoduls (CSM), das mit dem mindestens einem Anlageteil (RCE) zusammengefügt wurde, mittels mindestens einer Verdrehsicherung (RSC) gegen eine Relativdrehung gegenüber dem Statorkontaktelement (SCM) und/oder dem Wälzlager (REB) beim Zusammenfügen eines Teils des Vorspannmoduls (CSM) mit mindestens einem Anlageteil (RCE) des Wälzlagers (REB) und/oder beim Einbauen des Statorkontaktelements (SCM) gesichert wird.

13. Verfahren nach Anspruch 12 und mindestens Anspruch 2,
wobei bei dem Zusammenfügen zumindest eines Teils des Vorspannmoduls (CSM) mit mindestens einem Anlageteil (RCE) - insbesondere einem Lageraußenring (ROR) - des Wälzlagers (REB), das Lagerkontaktelement (BCM) mit dem Anlageteil (RCE) zusammengefügt wird.

14. Computerimplementiertes Verfahren zur Simulation (SIM) einer Anordnung (ARG) nach mindestens einem der vorhergehenden Ansprüche

15. Computerprogrammprodukt (CPP) zur Durchführung eines Verfahrens nach Anspruch 14 mittels mindestens eines Computers (CMP).
